(19) Europäisches Patentamt

European Patent Office

Office européen des brevets

(11) **EP 4 722 790 A1**

(12) **EUROPEAN PATENT APPLICATION**
published in accordance with Art. 153(4) EPC

(43) Date of publication:
**08.04.2026  Bulletin 2026/15**

(21) Application number: **24815573.1**

(22) Date of filing: **30.05.2024**

(51) International Patent Classification (IPC):
***G02B 27/02*** *(2006.01)*

(52) Cooperative Patent Classification (CPC):
**G02B 27/02**

(86) International application number:
**PCT/JP2024/019889**

(87) International publication number:
**WO 2024/248093 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **31.05.2023   JP 2023089469**

(71) Applicant: HOYA CORPORATION
**Shinjuku-ku
Tokyo 160-8347 (JP)**

(72) Inventors:
• **KIMURA, Ikuru
Tokyo 160-8347 (JP)**
• **ZHANG, Yu
Tokyo 160-8347 (JP)**

(74) Representative: **Schaumburg und Partner
Patentanwälte mbB
Mauerkircherstraße 31
81679 München (DE)**

(54) **RESIN SUBSTRATE, LIGHT GUIDE PLATE, OPTICAL MEMBER FOR EYEWEAR, AND WEARABLE DEVICE**

(57)     Provided is a resin substrate for forming an optical member, the resin substrate containing a resin, wherein the resin substrate has a thickness of 0.1 to 1.5 mm, the resin has a density of 0.93 to 2.10 g/cm$^3$, the resin substrate has a refractive index of 1.60 or more, the resin substrate has a retardation value of 30 nm or less, and when A represents the difference between the maximum value and the minimum value of retardation as measured along a straight line in a uniaxial direction of the resin substrate, and B represents the difference between the maximum value and the minimum value of retardation as measured along a straight line in a direction substantially orthogonal to the uniaxial direction, the relationship represented by the formula (1) below is satisfied:

$$A/B \leq 3.5 \qquad (1)$$

[ Fig 1]

EP 4 722 790 A1

**Description**

Technical Field

The present disclosure relates to a resin substrate, a light guide plate, an optical member for eyewear, and a wearable device.

Background Art

In augmented reality (AR) wearable devices such as head-mounted displays, it has been proposed to use light guide plates composed of high-refractive-index glass substrates for purposes such as expanding the field of view (FOV) (for example, PTL1).

The structure is such that projection light emitted from this type of AR wearable device is guided through a light guide plate to the view of a device wearer, the projection light is imaged using a diffraction grating or the like, and transmitted light from outside is also delivered to the vision of the device wearer together with the projection light.

Citation List

Patent Literature

[PTL1]: JP 2022-97824A

Summary of Invention

Technical Problem

The refractive index of a glass substrate can be increased by selecting a glass composition having a high density (3.0 to 5.5 g/cm$^3$); however, such high density hinders weight reduction of the wearable device and causes reductions in production yield and processability of the glass substrate. Accordingly, production of a light guide plate by using a resin composition having a low density and a high refractive index has been studied.

However, when molding a thin plate-shaped resin light guide plate having a plate thickness of 0.1 to 1.5 mm, residual stress occurs in the resin substrate (light guide plate) due to the dispersion state of inorganic fillers and further due to pressure, cooling time, and the like during molding, whereby birefringence is generated in light passing through the light guide plate, resulting in problems such as bleeding or blurring of contours of an image transmitted through the light guide plate. Therefore, even when a resin having an increased refractive index is used, the performance required for a light guide plate cannot be satisfied.

Accordingly, the present disclosure aims to provide a resin substrate, a light guide plate, an optical member for eyewear, and a wearable device that are lightweight and exhibit excellent image clarity.

Solution to Problem

A resin substrate according to an embodiment of the present disclosure is a resin substrate for forming an optical member, the resin substrate containing a resin,

wherein the resin substrate has a thickness of 0.1 to 1.5 mm,
the resin has a density of 0.93 to 2.10 g/cm$^3$,
the resin substrate has a refractive index of 1.60 or more,
the resin substrate has a retardation value of 30 nm or less, and
when A represents a difference between a maximum value and a minimum value of retardation as measured along a straight line in a uniaxial direction of the resin substrate, and B represents a difference between a maximum value and a minimum value of retardation as measured along a straight line in a direction substantially orthogonal to the uniaxial direction, a relationship represented by a formula (1) below is satisfied:

$$A/B \leq 3.5 \qquad (1)$$

A light guide plate according to an embodiment of the present disclosure includes:

a substrate containing a resin; and
a diffraction grating formed on at least a portion of the substrate,
wherein the substrate has a thickness of 0.1 to 1.5 mm,
the resin has a density of 0.93 to 2.10 g/cm$^3$,
the substrate has a refractive index of 1.60 or more,
the substrate has a retardation value of 30 nm or less, and
when A represents a difference between a maximum value and a minimum value of retardation as measured along a line in a uniaxial direction of the substrate, and B represents a difference between a maximum value and a minimum value of retardation as measured along a line in a direction substantially orthogonal to the uniaxial direction, a relationship represented by a formula (1) below is satisfied:

$$A/B \leq 3.5 \qquad (1)$$

An optical member for eyewear according to an embodiment of the present disclosure includes:

a light-transmitting base material made of a resin; and
the light guide plate according to any one of claims 10 to 17,
wherein at least one said light guide plate is integrally held by the light-transmitting base material, and
a refractive index (RW) of the light guide plate is greater than a refractive index (RT) of the light-transmitting base material.

A wearable device according to an embodiment of the present disclosure includes the optical member for eyewear.

Advantageous Effects of the Invention

The present disclosure can provide a resin substrate, a light guide plate, an optical member for eyewear, and a wearable device that are lightweight and exhibit excellent image reproducibility.

Brief Description of Drawings

[FIG. 1] FIG. 1 is a schematic cross-sectional view showing an embodiment of a light guide plate according to an embodiment of the present disclosure.
[FIG. 2] FIG. 2 is a diagram schematically illustrating the shape of a resin substrate according to an embodiment of the present disclosure.
[FIG. 3] FIG. 3 is a flowchart of a casting polymerization method.
[FIG. 4] FIG. 4 is a flowchart of an injection molding method.
[FIG. 5] FIG. 5 is a schematic diagram indicating a measurement range for retardation values and A/B on a resin substrate.

Description of Embodiments

Embodiments of the present disclosure (hereinafter referred to as "the present embodiments") will be described in detail below. However, the present invention is not limited to these embodiments, and various modifications may be made without departing from the gist of the invention. In the present specification, a numerical range expressed as "1 to 100", for example, is intended to include both the lower limit value "1" and the upper limit value "100". The same applies to other numerical ranges.

[Light Guide Plate]

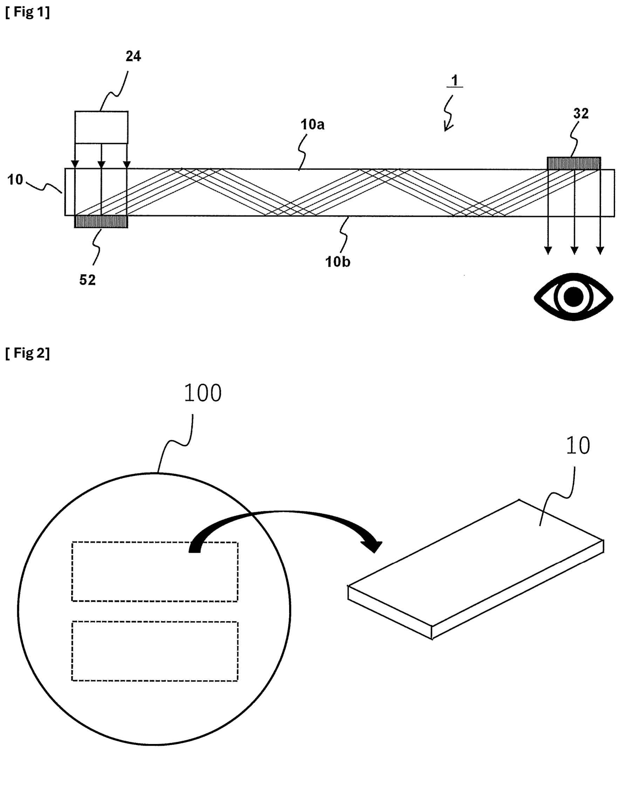

FIG. 1 is a schematic cross-sectional view showing an embodiment of a light guide plate according to an embodiment of the present disclosure. A light guide plate 1 includes a substrate 10 containing a resin, a diffraction grating 52, and a diffraction grating 32. The diffraction grating 52 and the diffraction grating 32 are formed on respective principal surfaces of the substrate 10. Light of respective wavelengths is introduced into the diffraction grating 52 from an image display device 24.

The image display element 24 may be, for example, a transmissive liquid crystal (LCD T-LCOS) panel driven by a field-sequential method. The image display element 24 modulates light of respective wavelengths according to image signals generated by an image engine (not shown) of a signal processing device 5. Light of respective wavelengths, which has been modulated by pixels in an active area of the image display element 24, is incident on the light guide plate 10 with a predetermined light beam cross section (the cross section having substantially the same shape as the active area). Note that the image display element 24 may alternatively be replaced with other types of display elements, for example, such as a DMD (Digital Mirror Device), a reflective liquid crystal (LCOS) panel, MEMS (Micro Electro Mechanical Systems), organic EL (Electro-Luminescence), or inorganic EL.

As shown in FIG. 1, the diffraction grating 52 is laminated on a second surface 10b of the base material 10. The diffraction grating 52 may, for example, have an interference fringe pattern pitch formed thereon.

Light of respective wavelengths, which has been modulated by the image display element 24, is sequentially incident into the base material 10 through a first surface 10a.

The diffraction grating 52 diffracts the sequentially incident light of respective wavelengths at a predetermined angle to guide the light toward the eye of a wearer. Light of respective wavelengths, which has been diffracted by the diffraction grating 52, propagates within the base material 10 while repeatedly undergoing total internal reflection at an interface between the base material 10 and air, and is then incident on the diffraction grating 32.

Light of respective wavelengths incident on the diffraction grating 32 is diffracted by the diffraction grating 32 and sequentially emitted substantially perpendicularly from the second surface 10b of the light guide plate 10 to the outside. The light of respective wavelengths thus emitted as substantially parallel light forms a virtual image I of an image generated by the image display element 24 on the wearer's retina.

<Substrate>

The substrate 10 of the light guide plate 1 according to the present embodiment contains a resin. Use of a base material containing a resin as the base material makes it possible to employ a material that has a relatively low density while having a high refractive index, thereby enabling the weight reduction of wearable devices.

The thickness of the substrate 10 is preferably 0.1 to 1.5 mm, more preferably 0.2 to 1.2 mm, and even more preferably 0.3 to 1.0 mm. The thickness of the resin substrate or the substrate of the light guide plate can be measured using an ultrasonic thickness gauge.

The density of the resin used for the substrate 10 is preferably 0.93 to 2.10 $g/cm^3$, more preferably 1.20 to 1.80 $g/cm^3$, and even more preferably 1.30 to 1.50 $g/cm^3$. A density within the aforementioned range enables weight reduction of the light guide plate. The density of the resin can be measured in accordance with JIS K 7112-1:2023 using an immersion method.

The refractive index of the substrate 10 is preferably 1.60 or more, more preferably 1.65 or more, and even more preferably 1.70 or more. The upper limit of the refractive index of the substrate is not particularly limited, but is, for example, 2.00 or less. By setting the refractive index of the substrate within the aforementioned range, it is possible to widen the field of view. The refractive index can be measured in accordance with JIS K 7142:2014.

The retardation value of the substrate is preferably 30 nm or less, more preferably 15 nm or less, and even more preferably 10 nm or less. The lower limit of the retardation value of the substrate is not particularly limited, but is, for example, 0.1 nm or more.

"Retardation" refers to the phase difference between light in the molecular main chain direction and light in the direction perpendicular thereto. Generally, polymers can be molded into arbitrary shapes by heating and melt-molding; however, it is known that retardation occurs due to stress and molecular orientation generated during heating and cooling processes. Note that "retardation" as used herein refers to in-plane retardation, unless otherwise specified.

The value of retardation can be brought within the aforementioned range by reducing residual stress in the resin substrate (light guide plate) through appropriate material selection and control of pressure during molding and cooling conditions. However, even when residual stress is reduced, variations in pressure distribution during molding of the resin substrate, or factors such as the molecular structure of a resin and the molecular orientation of inorganic fillers, both intended to increase the refractive index of the resin substrate, may cause differences in the distribution of retardation values across different locations of the resin substrate or the resin light guide plate. As a result, variations may occur in light passing through the light guide plate, making it difficult to sufficiently control the image and thereby reducing image sharpness. Accordingly, it is necessary not only to reduce the retardation value but also to reduce variation in the distribution of residual stress so that the range of A/B described below is achieved.

When A represents the difference between the maximum value and the minimum value of retardation as measured along a line in a uniaxial direction of the substrate 10, and B represents the difference between the maximum value and the minimum value of retardation as measured along a line in a direction substantially orthogonal to the uniaxial direction, it is preferable that the relationship represented by the formula (1) below is satisfied. When this range of A/B is satisfied, variation in the distribution of residual stress can be reduced, thereby preventing a decrease in the intensity and sharpness of image light due to optical transmission loss.

$$A/B \leq 3.5 \qquad (1)$$

A/B is preferably 1.0 to 3.0, more preferably 1.1 to 2.5, even more preferably 1.1 to 1.8, yet even more preferably 1.1 to 1.6, yet even more preferably 1.1 to 1.5, and yet even more preferably 1.1 to 1.2.

In order to achieve the above range of A/B, the retardation value needs to be set to 30 nm or less, and additionally, internal stress needs to be removed. Specifically, internal stress can be removed by polishing or annealing the entire resin substrate so as to eliminate variation in the distribution of residual stress. There is a tendency for A/B to increase when the retardation value is reduced. Therefore, even when the retardation value is reduced, it is possible to reduce variation in birefringence by preventing anisotropy from occurring in the substrate.

After an accelerated weathering test conducted for 200 hours in cycles of 5 hours of UV irradiation at 0.75 W/m$^2$ and 5 hours of moisture exposure at 95% RH, the haze of the light guide plate is preferably 1.8% or less, more preferably 1.0% or less, and even more preferably 0.8% or less.

In accordance with JIS K 7373:2006, an accelerated weathering test is conducted for 168 hours using a QUV accelerated weathering tester QUV/SE (manufactured by Q-Lab) in cycles of 4 hours of UV irradiation (0.20 W/m$^2$) and 4 hours of moisture exposure at 95% RH, and haze is measured in accordance with JIS K 7136.

The ratio (R/D) of the refractive index (R) of the substrate to the density (D) of the substrate is preferably 1.00 to 1.30, more preferably 1.10 to 1.30, and even more preferably 1.13 to 1.26. By satisfying the above range of R/D, it is possible to obtain a light guide plate that is lightweight and has a high refractive index. The value of R/D is calculated from the refractive index value (R) of the resin substrate or the resin light guide plate and the density (D) of the resin substrate or the resin light guide plate, which are obtained using the above measurement methods.

Examples of the resin used for the substrate include at least one selected from the group consisting of a urethane-based resin, an episulfide resin, a polycarbonate resin, an acrylic resin, an epoxy resin, and a nitrogen-containing aromatic polymer resin.

(Urethane-Based Resin)

The urethane-based resin is a cured product of a polymerizable composition containing an isocyanate component and an active hydrogen compound component. Examples of urethane-based resins include: a thiourethane resin having polymerization sites of an isocyanate component and a polythiol component; a thiourethane resin having polymerization sites of an isocyanate component and a polyol component; and a urethane-urea resin having a polythiourethane moiety formed by polymerization of an isocyanate component and a thiol component and a polyurea moiety formed by polymerization of an isocyanate component and a polyamine component.

Examples of the isocyanate component include bis(isocyanatomethyl)bicyclo[2.2.1]heptane, bis(isocyanatomethyl)cyclohexane, bis(isocyanatomethyl)benzene, tolylene diisocyanate, diphenylmethane diisocyanate, dicyclohexylmethane diisocyanate, hexamethylene diisocyanate, pentamethylene diisocyanate, and the like.

Examples of the active hydrogen compound component include toluenediamine, pentaerythritol tetrakis(mercaptoacetate), pentaerythritol tetrakis(mercaptopropionate), trimethylolpropane tris(mercaptoacetate), trimethylolpropane tris(mercaptopropionate), bis(mercaptoethylthio)mercaptopropane, bis(mercaptomethyl)-3,6,9-trithiaundecane dithiol, dimercaptoethyl sulfide, bis(mercaptomethyl)dithiane, and the like. Among these, it is preferable to use polythiol components such as pentaerythritol tetrakis(mercaptoacetate), pentaerythritol tetrakis(mercaptopropionate), trimethylolpropane tris(mercaptoacetate), trimethylolpropane tris(mercaptopropionate), bis(mercaptoethylthio)mercaptopropane, bis(mercaptomethyl)-3,6,9-trithiaundecane dithiol, dimercaptoethyl sulfide, and bis(mercaptomethyl)dithiane.

The equivalent ratio of an active hydrogen group in the active hydrogen compound component to an isocyanato group in the polyisocyanate component (active hydrogen group/isocyanato group) is preferably 40/60 to 60/40, and more preferably 45/55 to 55/45. Examples of active hydrogen groups include hydroxy groups, mercapto groups, and -NH groups.

(Episulfide Resin)

The episulfide resin is a cured product of a polymerizable composition containing an epithio compound. Here, the polymerizable composition may contain other monomers.

Examples of the epithio compound include bis-(β-epithiopropyl)sulfide, bis-(β-epithiopropyl)disulfide, and the like.

In addition to the epithio compound, other polymerizable components such as the above-described polyisocyanate component and polythiol component may be added to the polymerizable composition.

The content of the epithio compound in the polymerizable composition is preferably 50 to 98 mass%, more preferably 60 to 96 mass%, and even more preferably 70 to 96 mass%.

It is preferable that the polymerizable composition further contains sulfur in combination with the epithio compound.

The content of sulfur in the polymerizable composition is preferably 1 to 30 mass%, more preferably 5 to 20 mass%, and even more preferably 10 to 20 mass%.

It is preferable that the polymerizable composition further contains a polythiol compound in combination with the epithio compound.

Examples of the polythiol compound include the compounds exemplified above.

When used in combination with the epithio compound, the content of the polythiol compound in the polymerizable components is preferably 2 to 50 mass% or more, more preferably 4 to 30 mass%, and even more preferably 5 to 10 mass%.

When the polymerizable composition contains a polyisocyanate component and a polythiol component, or an epithio compound, it is preferable that the polymerizable composition contains a polymerization catalyst.

Examples of the polymerization catalyst include tin compounds such as dibutyltin diacetate, dibutyltin dilaurate, dibutyltin dichloride, and dimethyltin dichloride; and nitrogen-containing compounds such as tertiary amines, quaternary ammonium salts, imidazole compounds, and pyrazole compounds.

When the polymerizable composition contains an isocyanate component and an active hydrogen compound component, the amount of the polymerization catalyst added to the polymerizable composition is preferably 0.001 to 2 parts by mass, more preferably 0.005 to 1 part by mass, and even more preferably 0.007 to 0.5 part by mass or more, relative to 100 parts by mass of the total amount of the isocyanate component and the active hydrogen compound component.

When the polymerizable composition contains an epithio compound, the amount of the polymerization catalyst added to the polymerizable composition is preferably 0.001 to 2 parts by mass, more preferably 0.005 to 1 part by mass, and even more preferably 0.007 to 0.5 parts by mass, relative to 100 parts by mass of the total amount of the polymerizable components.

(Polycarbonate Resin)

The polycarbonate resin is a cured product of a polymerizable composition preferably containing diethylene glycol bis(allyl carbonate). The polymerizable composition preferably contains diethylene glycol bis(allyl carbonate), and more preferably contains diethylene glycol bis(allyl carbonate), benzyl methacrylate, diallyl phthalate, and alkyl methacrylate having an alkyl group with 1 to 4 carbon atoms.

The amount of diethylene glycol bis(allyl carbonate) in the polymerizable composition is preferably 5 to 100 mass%, more preferably 10 to 80 mass%, and even more preferably 20 to 50 mass%, relative to the total amount of monomers in the polymerizable composition. When used in combination with benzyl methacrylate, diallyl phthalate, and alkyl methacrylate having an alkyl group with 1 to 4 carbon atoms, the amount of diethylene glycol bis(allyl carbonate) in the polymerizable composition is more preferably 5 to 40 mass%, more preferably 10 to 35 mass%, and even more preferably 20 to 40 mass%, relative to the total amount of monomers in the polymerizable composition.

The amount of benzyl methacrylate in the polymerizable composition is preferably 5 to 40 mass%, more preferably 10 to 30 mass%, and even more preferably 15 to 25 mass%, relative to the total amount of monomers in the polymerizable composition.

Examples of the diallyl phthalate include one or two selected from the group consisting of diallyl isophthalate and diallyl terephthalate.

The amount of the diallyl phthalate in the polymerizable composition is preferably 14 to 88 mass%, more preferably 20 to 70 mass%, and even more preferably 30 to 60 mass%, relative to the total amount of monomers in the polymerizable composition.

Examples of the alkyl methacrylate having an alkyl group with 1 to 4 carbon atoms include at least one selected from the group consisting of methyl methacrylate, ethyl methacrylate, n-propyl methacrylate, iso-propyl methacrylate, n-butyl methacrylate, sec-butyl methacrylate, iso-butyl methacrylate, and tert-butyl methacrylate.

The amount of the alkyl methacrylate in the polymerizable composition is preferably 1 to 6 mass%, more preferably 2 to 5 mass%, and even more preferably 3 to 5 mass%, relative to the total amount of monomers in the polymerizable composition.

Examples of a radical initiator used for polymerization include 1,1-azobis(cyclohexane)carbonate, diisopropyl peroxycarbonate, 1,1'-azobis(cyclohexane)nitrate, di-tert-butyl peroxide, and the like.

The amount of the radical initiator in the polymerizable composition is preferably 0.1 to 10 parts by mass, more preferably 0.5 to 8 parts by mass, and even more preferably 1.0 to 5 parts by mass, relative to 100 parts by mass of monomers in the polymerizable composition.

(Acrylic Resin)

The acrylic resin is a cured product of a polymerizable composition containing an acrylic compound. Here, the polymerizable composition may contain other monomers.

Examples of the acrylic compound include polyfunctional (meth)acrylate compounds having an aromatic ring, polyalkylene glycol di(meth)acrylate, monofunctional acrylates, and the like.

Among these, it is preferable that the polymerizable composition contains a polyfunctional (meth)acrylate compound having an aromatic ring and polyalkylene glycol di(meth)acrylate.

Examples of the polyfunctional (meth)acrylate compound having an aromatic ring include alkylene oxide-modified bisphenol A having (meth)acryloyl groups at both ends, and alkylene oxide-modified and urethane-modified bisphenol A having (meth)acryloyl groups at both ends. Among these, alkylene oxide-modified bisphenol A having (meth)acryloyl groups at both ends is preferable. Examples of the alkylene oxide-modified bisphenol A having (meth)acryloyl groups at both ends include 2,2-bis[4-{2-((meth)acryloyloxy)ethoxy}phenyl]propane and 2,2-bis[4-{2-((meth)acryloyloxy)ethoxy}-3,5-dibromophenyl]propane.

The content of the polyfunctional (meth)acrylate compound having an aromatic ring in the polymerizable composition is preferably 40 to 90 mass, more preferably 50 to 80 mass%, and even more preferably 55 to 70 mass% or more.

Examples of the polyalkylene glycol di(meth)acrylate include diethylene glycol di(meth)acrylate, triethylene glycol di(meth)acrylate, tetraethylene glycol di(meth)acrylate, dipropylene glycol di(meth)acrylate, tripropylene glycol di(meth)acrylate, tetrapropylene glycol di(meth)acrylate, dibutylene glycol di(meth)acrylate, tributylene glycol di(meth)acrylate, and tetrabutylene glycol di(meth)acrylate.

The content of the polyalkylene glycol di(meth)acrylate in the polymerizable composition is preferably 10 to 60 mass%, more preferably 20 to 50 mass%, and even more preferably 30 to 45 mass% or more.

Examples of the monofunctional (meth)acrylates include phenyl (meth)acrylate, benzyl (meth)acrylate, phenoxyethyl (meth)acrylate, 3-phenoxy-2-hydroxypropyl (meth)acrylate, 2-phenylphenyl (meth)acrylate, 4-phenylphenyl (meth)acrylate, 3-(2-phenylphenyl)-2-hydroxypropyl (meth)acrylate, 3-(4-phenylphenyl)-2-hydroxypropyl (meth)acrylate, 1-naphthyloxyethyl (meth)acrylate, 2-naphthyloxyethyl (meth)acrylate, 2,4,6-tribromophenyl (meth)acrylate, 2,4,6-tribromophenoxyethyl (meth)acrylate, 2,4,6-tribromophenyl-di(oxyethyl)-(meth)acrylate, and 2,4,6-tribromobenzyl (meth)acrylate.

When the polymerizable composition contains an acrylic compound, it is preferable that the polymerizable composition contains a radical polymerization initiator.

Examples of the radical polymerization initiator include an energy-ray-sensitive polymerization initiator and a heat-sensitive polymerization initiator.

The amount of the radical polymerization initiator added is preferably 0.01 to 10 parts by mass, more preferably 0.1 to 5 parts by mass, and even more preferably 0.5 to 3 parts by mass, relative to 100 parts by mass of the total amount of the acrylic compounds.

(Nitrogen-Containing Aromatic Polymer Resin)

Examples of the nitrogen-containing aromatic polymer resin include resins obtained from raw materials containing cyanuric chloride and a triazine-based diamine; polymers obtained by polymerization of cyanuric chloride and an aromatic diamine; polymers obtained by polymerization of a triazine-containing aromatic triamine and triazine dichloride; and polymers obtained by polymerization of aromatic tricarboxylic acid and a triazine-containing aromatic diamine, which can be synthesized as highly branched polymers having a melamine structure.

The base material may contain other additives, such as an ultraviolet absorber, a release agent, a colorant, an antioxidant, a refractive index modifier, a birefringence modifier, a discoloration inhibitor, or a fluorescent whitening agent. One or two or more of these may be used.

It is preferable that the substrate contains an ultraviolet absorber or an antioxidant. By containing an ultraviolet absorber or an antioxidant, the resin substrate and the resin light guide plate can have improved weather resistance, deterioration over time and yellowing can be prevented, and transparency during use can be maintained. Specifically, it is preferable to adjust the amount added so that the haze of the resin substrate or the resin light guide plate after a QUV accelerated weathering test becomes 1.8% or less.

Examples of the ultraviolet absorber include benzophenone-based compounds, benzotriazole-based compounds, dibenzoylmethane, 4-tert-butyl-4'-methoxybenzoylmethane, and the like.

Examples of the benzophenone-based compounds include 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, 2,2'-dihydroxy-4-methoxybenzophenone, and the like.

Examples of the benzotriazole-based compounds include benzotriazole-based compounds such as 2-ethylhexyl 2-(2-hydroxy-4-ethoxyphenyl)2H-benzotriazole-5-carboxylate, 2-(2-hydroxy-5-methylphenyl)-2H-benzotriazole, 2-(2-hydroxy-3,5-di-tert-butylphenyl)-5-chloro-2H-benzotriazole, 2-(2-hydroxy-3-tert-butyl-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, and 2-(2-hydroxy-4-octyloxyphenyl)-2H-benzotriazole. One of these may be used alone, or two or more thereof may be used in combination.

The amount of the ultraviolet absorber added is preferably 0.01 mass% to 5 mass%, more preferably 0.05 mass% to 3 mass%, and even more preferably 0.1 mass% to 2 mass%, relative to the entire substrate. Furthermore, by adding a hindered amine light stabilizer in an amount of 0.01 parts by mass to 5 parts by mass relative to the entire substrate together with the ultraviolet absorber, it is possible to prevent an increase in the haze value and a decrease in transparency when the substrate is used as a light guide plate.

Examples of the antioxidant include phenolic antioxidants, sulfur-based antioxidants, and phosphorus-based antioxidants.

Examples of the phenolic antioxidants include 2,6-di-t-butyl-4-methylphenol and phenol. Examples of the sulfur-based antioxidants include dilauryl 3,3'-thiodipropionate. Examples of the phosphorus-based antioxidants include phosphite compounds such as triphenyl phosphite, trioctyl phosphite, and tridecyl phosphite. An antioxidant may be used alone, or two or more antioxidants may be used in combination.

The amount of the antioxidant added is preferably 0.01 mass% to 5 mass%, more preferably 0.05 mass% to 3 mass%, and even more preferably 0.1 mass% to 2 mass%, relative to the entire substrate.

It is preferable that the substrate contains a refractive index modifier. When the substrate contains a refractive index modifier, the refractive index of the resin light guide plate can be increased even when a resin having a low refractive index is used, making it possible to obtain a wide field of view.

Examples of the refractive index modifier include inorganic particles. Examples of materials for the inorganic particles include silica, alumina, zirconia, titania, and zeolite. It is preferable that the inorganic particles are surface-modified with a silane coupling agent and have a particle size of 100 nm or less. The particle size of the inorganic particles is preferably 5 to 40 nm, more preferably 10 to 35 nm, and even more preferably 10 to 30 nm. The particle size of the inorganic particles refers to the average particle diameter.

When the refractive index modifier is added in a large amount, the material density of the substrate as a whole increases, making it impossible to achieve weight reduction of the light guide plate. Furthermore, when inorganic particles are added as the refractive index modifier in a ratio of 20 parts by mass or more relative to 100 parts by mass of the substrate resin, the fluidity of the resin itself decreases, and internal stress occurs due to orientation of the material, which causes birefringence. Therefore, the amount of the refractive index modifier added is preferably 0.1 to 15 parts by mass, more preferably 0.1 to 10 parts by mass, and even more preferably 0.1 to 5 parts by mass, relative to 100 parts by mass of the substrate resin.

It is preferable that the substrate contains a birefringence modifier. When the substrate contains a birefringence modifier, it is easy to adjust the retardation value to 30 nm or less.

Examples of the birefringence modifier include triazine-based birefringence modifiers and birefringence modifiers composed of a compound having a fluorene skeleton. Examples of the triazine-based birefringence modifiers include 2-hydroxyphenyl-s-triazine derivatives. Commercially available products of triazine-based birefringence modifiers include Tinuvin 1600, Tinuvin 460, Tinuvin 477, Tinuvin 479, and Tinuvin 1577 manufactured by BASF; LA-F70 and LA46 manufactured by ADEKA CORPORATION; and the like.

The amount of the birefringence modifier added is preferably 1 to 30 parts by mass, more preferably 5 to 20 parts by mass, and even more preferably 10 to 15 parts by mass, relative to 100 parts by mass of the substrate resin.

The shape of the substrate of the light guide plate is not particularly limited, but may be a quadrilateral plate.

The flatness of the substrate of the light guide plate is preferably 25.0 μm or less, more preferably 20.0 μm or less, even more preferably 12.0 μm or less, and yet even more preferably 10.0 μm or less. The lower limit value of flatness is not particularly limited, but is, for example, 0.1 μm or more. Flatness is a measurement of the flatness of one surface of a substrate, and its value tends to increase when the substrate exhibits curvature or warpage. Flatness can be measured using a flatness tester (FT-15) manufactured by Nidec Corporation.

By removing residual stress, it is possible to adjust the flatness value of the resin substrate or the substrate of the light guide plate to a small value.

The TTV of the substrate of the light guide plate is preferably 1 μm or less, more preferably 0.9 μm or less, and even more preferably 0.8 μm or less. The lower limit value of TTV is not particularly limited, but is, for example, 0.01 μm or more. TTV means the difference between the maximum value and the minimum value of thickness (i.e., the distance between the first surface 10a and the second surface 10b of the substrate of the light guide plate) (namely, TTV (Total Thickness Variation)). TTV can be measured using a Bow/Warp measuring apparatus (SBW-331ML/d) manufactured by Kobelco Research Institute, Inc.

[Resin Substrate]

The above-described substrate may be formed by molding resin into a desired shape, or may be produced by cutting from a resin substrate.

That is to say, a resin substrate according to an embodiment of the present disclosure is a resin substrate for forming an optical member,

wherein the resin substrate contains a resin,
the resin substrate has a thickness of 0.1 to 1.5 mm,
the resin has a density of 0.93 to 2.10 g/cm$^3$,
the resin substrate has a refractive index of 1.60 or more,
the resin substrate has a retardation value of 30 nm or less, and
when A represents the difference between the maximum value and the minimum value of retardation as measured along a line in a uniaxial direction of the resin substrate, and B represents the difference between the maximum value and the minimum value of retardation as measured along a line in a direction substantially orthogonal to the uniaxial direction, the relationship represented by the formula (1) below is satisfied:

$$A/B < 3.5 \qquad (1)$$

Since examples and preferred ranges of resin, additives, thickness, density, refractive index, retardation value, A/B, and flatness of the resin substrate according to the present embodiment are the same as those of the above-described substrate, description thereof is omitted. However, the range of the retardation value and the range of A/B are as described in Examples.

The shape of the resin substrate according to the present embodiment is not particularly limited, but may be a disk. The diameter of the disk is not particularly limited, but may be, for example, 50 mm to 450 mm or 60 mm to 150 mm. The resin substrate according to the present embodiment may have a shape in which no base curve such as a convex surface or a concave surface, as in a lens base material, is formed, and may, for example, have a flat plate shape.

The resin substrate according to the present embodiment will be described in greater detail below. FIG. 2 is a diagram schematically illustrating the shape of the resin substrate according to the present embodiment. A resin substrate 100 has a disk shape. A base material 10 of a light guide plate is cut from the resin substrate 100 and used.

The resin substrate according to the present embodiment may be obtained by, for example, a casting polymerization method, in which a polymerizable composition is subjected to casting polymerization to obtain the resin substrate, or an injection molding method, in which molten resin is injected into a mold.

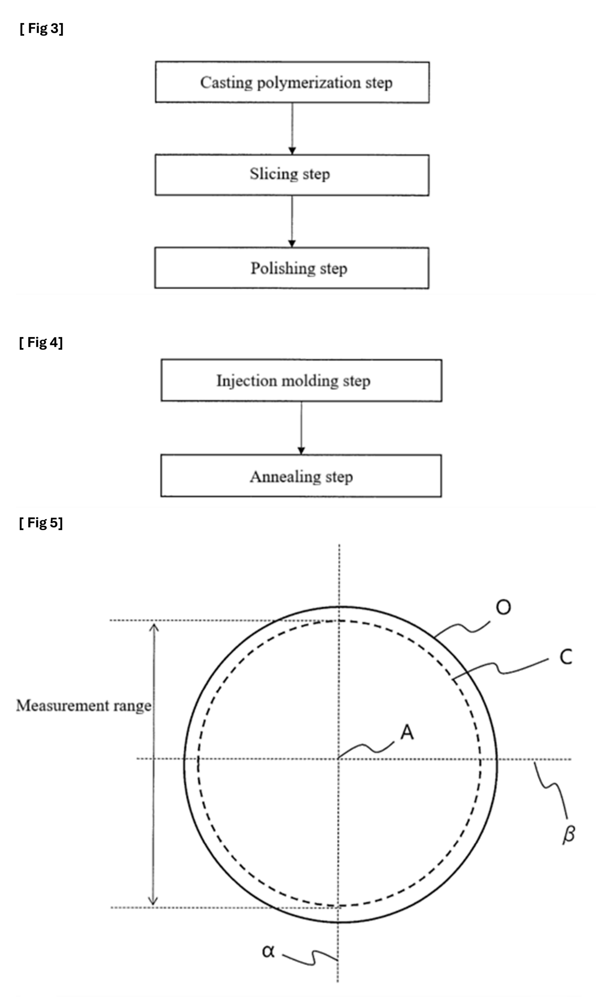

As shown in FIG. 3, when the casting polymerization method is employed, a method for producing the resin substrate includes a casting polymerization step of subjecting a polymerizable composition to casting polymerization to obtain a resin substrate, and may further include a slicing step of slicing the resin substrate to obtain a resin substrate having a desired thickness. The method may further include an annealing step of removing residual stress by heat treatment for the purpose of providing the resin substrate with a predetermined roughness and flatness and reducing variation in the distribution of residual stress, and a polishing step of polishing the resin substrate using a polishing apparatus.

Specifically, a raw material liquid for the resin substrate is poured into a cavity formed by two molds arranged at a predetermined interval. A resin base material is formed through a curing reaction of the raw material liquid and is released from the molds. Subsequently, the released resin substrate is sliced to a predetermined thickness of 0.3 to 2.0 mm using a wire saw, and then polished using a polishing apparatus with a sufficient allowance until wire saw marks disappear, thereby obtaining a resin substrate having a thickness of 0.1 to 1.5 mm. Note that, if necessary, the released resin base material may have its outer periphery cut to form a smooth surface before being sliced with the wire saw.

The polishing apparatus may be any apparatus capable of polishing the substrate surface without imparting anisotropy, and specifically, a lapping machine can preferably be used.

Scratches and residual stress on the resin substrate surface can be removed by placing the resin substrate on a flat surface plate, flowing a slurry of alumina, silica, or the like, and performing polishing while pressing the surface plate and the resin substrate against each other under a predetermined pressure and rotating them relative to each other. Both single-sided and double-sided polishing apparatuses can be used for polishing the resin substrate, and machining marks, such as wire-saw marks, and residual stress generated on both surfaces of the substrate can be uniformly removed, thereby reducing flatness to a small value.

Through the above steps, a resin substrate having a retardation value within a desired range and an A/B within a desired range can be produced.

As shown in FIG. 4, when the injection molding method is employed, a method for producing the resin substrate includes an injection molding step of injection-molding a thermoplastic molten resin in a mold to obtain a resin substrate, and may further include an annealing step of annealing the resin substrate for the purpose of achieving predetermined dimensional accuracy and flatness and reducing variation in the distribution of residual stress.

Specifically, in order to form a resin substrate, molten resin is injected into a cavity having a predetermined shape and cooled in the mold. Thereafter, the resin substrate is removed from the mold and annealed to remove residual stress. Conditions for annealing can be appropriately set according to the resin material; for example, depending on the type of resin to be annealed, the resin may be heated at a temperature equal to or higher than the glass transition temperature and lower than the melting point, such as 120°C to 210°C, for 3 to 20 hours, and then cooled over a period not less than the heating time to reduce internal strain and remove residual stress. Thereafter, the resin substrate may be subjected to surface polishing to adjust its shape.

Through the above steps, a resin substrate having a retardation value within a desired range and an A/B within a desired range can be produced.

A substrate to be used for a light guide plate is cut from the resin substrate according to the present embodiment and used.

The light guide plate according to the present embodiment is used in augmented reality (AR) wearable devices or the like. More specifically, the light guide plate according to the present embodiment is used as an optical member for eyewear (for example, as a spectacle lens-type display section) employed in wearable devices.

[Optical Member for Eyewear]

An optical member for eyewear according to an embodiment of the present disclosure includes a light-transmitting base material made of resin and the light guide plate according to the present embodiment. At least one said light guide plate is integrally held by.

Note that the refractive index (RW) of the light guide plate is greater than the refractive index (RT) of the light-transmitting base material. The difference (RW-RT) between the refractive index (RW) of the light guide plate and the refractive index (RT) of the light-transmitting base material is preferably 0.2 to 1.0, more preferably 0.3 to 0.8, and even more preferably 0.3 to 0.5.

The term "light-transmitting base material" means a base material that is transparent so that the opposite side is visible.

The optical member for eyewear is not particularly limited as long as it can be applied to a wearable device; for example, it may be a spectacle lens applied to a wearable device in the form of spectacles. In this case, the light-transmitting base material has a shape corresponding to a spectacle lens base material. The spectacle lens base material does not necessarily need to have a spherical surface and may be a flat plate having a shape compatible with a spectacle frame.

[Wearable Device]

An example of a wearable device using the light guide plate according to the present embodiment is a head-mounted display. The head-mounted display includes, for example, a spectacle-type frame to be worn on the head of a wearer and the optical member for eyewear according to the present embodiment mounted in the frame. The spectacle-type frame may further be provided with a backlight for illuminating an image, a signal processing device for displaying the image, a speaker for reproducing sound, and the like.

In the present disclosure, the following embodiments are described.

<1> A resin substrate for forming an optical member, the resin substrate containing a resin,

wherein the resin substrate has a thickness of 0.1 to 1.5 mm,
the resin has a density of 0.93 to 2.10 g/cm$^3$,
the resin substrate has a refractive index of 1.60 or more,
the resin substrate has a retardation value of 30 nm or less, and
when A represents a difference between a maximum value and a minimum value of retardation as measured along a straight line in a uniaxial direction of the resin substrate, and B represents a difference between a maximum value and a minimum value of retardation as measured along a straight line in a direction substantially orthogonal to the uniaxial direction, a relationship represented by a formula (1) below is satisfied:

$$A/B \leq 3.5 \qquad (1)$$

<2> The resin substrate according to clause <1>, wherein the resin substrate has a haze of 1.8% or less after an accelerated weathering test is conducted for 200 hours in cycles of 5 hours of UV irradiation at 0.75 W/m² and 5 hours of moisture exposure at 95% RH.

<3> The resin substrate according to clause <1> or <2>, wherein a ratio (R/D) of the refractive index (R) of the resin substrate to a density (D) of the resin substrate is 1.00 to 1.30.

<4> The resin substrate according to any one of clauses <1> to <3>, wherein the resin includes at least one selected from the group consisting of a urethane-based resin, an episulfide resin, a polycarbonate resin, an acrylic resin, an epoxy resin, and a nitrogen-containing aromatic polymer resin.

<5> The resin substrate according to any one of clauses <1> to <4>, wherein the resin substrate contains an ultraviolet absorber or an antioxidant.

<6> The resin substrate according to any one of clauses <1> to <5>, wherein the resin substrate contains a refractive index modifier.

<7> The resin substrate according to any one of clauses <1> to <6>, wherein the resin substrate contains a birefringence modifier.

<8> The resin substrate according to any one of clauses <1> to <7>, wherein the resin substrate is a disk.

<9> The resin substrate according to any one of clauses <1> to <8>, wherein the resin substrate has a flatness of 25.0 μm or less.

<10> A light guide plate including:

a substrate containing a resin; and
a diffraction grating formed on at least a portion of the substrate,
wherein the substrate has a thickness of 0.1 to 1.5 mm,
the resin has a density of 0.93 to 2.10 g/cm³,
the substrate has a refractive index of 1.60 or more,
the substrate has a retardation value of 30 nm or less, and
when A represents a difference between a maximum value and a minimum value of retardation as measured along a line in a uniaxial direction of the substrate, and B represents a difference between a maximum value and a minimum value of retardation as measured along a line in a direction substantially orthogonal to the uniaxial direction, a relationship represented by a formula (1) below is satisfied:

$$A/B \leq 3.5 \qquad (1)$$

<11> The light guide plate according to clause <10>, wherein the light guide plate has a haze of 1.8% or less after an accelerated weathering test is conducted for 200 hours in cycles of 5 hours of UV irradiation at 0.75 W/m² and 5 hours of moisture exposure at 95% RH.

<12> The light guide plate according to clause <10> or <11>, wherein a ratio (R/D) of the refractive index (R) of the substrate to a density (D) of the substrate is 1.00 to 1.30.

<13> The light guide plate according to any one of clauses <10> to <12>, wherein the resin includes at least one selected from the group consisting of a urethane-based resin, an episulfide resin, a polycarbonate resin, an acrylic resin, an epoxy resin, and a nitrogen-containing aromatic polymer resin.

<14> The light guide plate according to any one of clauses <10> to <13>, wherein the substrate contains an ultraviolet absorber or an antioxidant.

<15> The light guide plate according to any one of clauses <10> to <14>, wherein the substrate contains a refractive index modifier.

<16> The light guide plate according to any one of clauses <10> to <15>, wherein the substrate contains a birefringence modifier.

<17> The light guide plate according to any one of clauses <10> to <16>, wherein the substrate has a flatness of 25.0 μm or less.

<18> An optical member for eyewear, including:

a light-transmitting base material made of a resin; and
the light guide plate according to any one of clauses <10> to <17>,
wherein at least one said light guide plate is integrally held by the light-transmitting base material, and
a refractive index (RW) of the light guide plate is greater than a refractive index (RT) of the light-transmitting base material.

<19> A wearable device including the optical member for eyewear according to clause <18>.

Examples

The present embodiments will be described in further detail below by way of examples. However, the present embodiments are not intended to be limited to the following examples.

[Retardation Value]

The retardation value of the resin substrate or the substrate of the light guide plate was measured using a birefringence measuring apparatus PA100 manufactured by Photonic Lattice, Inc.

<Light Guide Plate>

The retardation value is obtained as the average value of the measured retardation within a circle centered at the centroid of the shape defined by the outer periphery of the resin light guide plate, the circle being drawn so as to be tangent to the outer periphery.

<Resin Substrate>

The retardation value of the resin substrate is measured within a region excluding the outer peripheral portion of the resin substrate. For example, as shown in FIG. 5, a circle centered at the centroid A of the shape defined by the outer periphery O of the resin substrate is drawn (when the shape of the outer periphery of the resin substrate is circular, the circle centered at the centroid coincides with the shape of the outer periphery), and then, a concentric circle C having a diameter equal to 90% of that of the circle is drawn inside the circle. The retardation value is obtained as the average value of the measured retardation within the inner concentric circle. The reason for using the value obtained within the inner concentric circle as described above is that the outer peripheral portion of the resin substrate tends to develop residual stress during molding and processing, resulting in locally high retardation values. On the other hand, since the resin substrate is cut to obtain a resin light guide plate for use, the outer peripheral portion of the resin substrate is discarded and not used as part of the resin light guide plate, and therefore, the retardation value of the outer peripheral portion does not need to be taken into consideration.

[Method for Measuring A/B]

The distribution A/B of retardation values was measured using the following measurement method.

Two straight lines $\alpha$ and $\beta$ substantially orthogonal to each other at the center of gravity (centroid) of the resin substrate or the substrate of the light guide plate were used for measurement. The center of gravity is defined as the intersection point of two straight lines that bisect the area of the plan view of the substrate, assuming that the thickness and density of the substrate are uniform. This intersection point is referred to as the center of gravity (centroid). Here, "substantially orthogonal" means an angle within the range of $90° \pm 5°$. This range is intended to account for cases where it is difficult to set the reference lines to be perfectly orthogonal due to the measuring instrument settings, and the measurement is performed at any position within this range.

The measurement range for the retardation value along each of the straight lines $\alpha$ and $\alpha$ passing through the center of gravity is within the region inside its intersection points with the outer periphery of the resin substrate or the substrate of the light guide plate.

<Resin Substrate>

For the resin substrate, the measurement was performed according to the following criteria.

As shown in FIG. 5, when the length of the segment between the intersection points of each of the straight lines $\alpha$ and $\beta$ with the outer periphery of the resin substrate is defined as 100, retardation values were measured within the range corresponding to 75% of that length from the centroid. Based on these measured values, the difference A between the maximum and minimum values along the straight line $\alpha$ and the difference B between the maximum and minimum values along the straight line $\beta$ were calculated.

The positions of the straight lines $\alpha$ and $\beta$ may be arbitrarily selected as long as they intersect orthogonally at the center of gravity, and the value of A/B at the location where A/B is largest is taken as the A/B value. However, it is necessary to satisfy A > B.

Accordingly, the A/B value is preferably within the range of 1 to 3.5, with values closer to 1 being preferred (indicating smaller variation and distribution of retardation values in the substrate and the light guide plate). The measurement range is set to 90% from the center of gravity because the vicinity of the outer periphery is prone to birefringence caused by external stress, which prevents accurate measurement, and is therefore excluded in order to evaluate the variation in the distribution of retardation. In addition, particularly in the vicinity of the outer periphery of the resin substrate, high residual stress occurs due to processing. However, when a light guide plate is cut from the resin substrate for use, the vicinity of the outer periphery is removed by cutting and not used, and thus is excluded from evaluation.

<Light Guide Plate>

For the light guide plate, the measurement was performed according to the following criteria.

In the case of a light guide plate (having a rectangular shape), straight lines $\alpha$ and $\beta$ that intersect orthogonally at the center of gravity are drawn, and the value of A/B at the location where A/B is largest is taken as the A/B value. However, it is necessary to satisfy A > B.

[Haze]

In accordance with JIS K 7373:2006, an accelerated weathering test was conducted for 168 hours using a QUV accelerated weathering tester QUV/SE (manufactured by Q-Lab) in cycles of 4 hours of UV irradiation (0.20 W/m$^2$) and 4 hours of moisture exposure at 95% RH. The haze of the resin substrate and the resin light guide plate was measured in accordance with JIS K 7136.

[Example 1]

A polymerizable composition for a resin substrate (a polymerizable composition containing raw materials for a polythiourethane resin) was injected into a cavity formed by two molds arranged at a predetermined interval. The resin substrate was formed through a curing reaction of the raw material liquid and then released from the molds. Subsequently, the released resin substrate was sliced into a plurality of resin substrates having a thickness of 1.1 mm using a wire saw. In order to remove residual stress caused by processing defects such as scratches generated during slicing, the plurality of resin substrates were subjected to annealing under conditions of 170°C for 3 hours while being stacked with spacers interposed. After that, polishing was performed using a double-sided lapping machine with an alumina slurry having an average particle diameter of 0.5 $\mu$m under a pressure of 6 kPa so that the retardation reached a predetermined value. By the above method, a resin substrate having a thickness of 1.0 mm was formed. The refractive index of the resin substrate was 1.67, and the density was 1.34 g/cm$^3$. Note that the flatness of the resin substrate was 3.5 $\mu$m, and the TTV of the resin substrate was 0.8 $\mu$m. The haze value before the accelerated weathering test was 0.3%, and the haze value after the accelerated weathering test was 1.5%.

[Example 2]

A resin substrate having a thickness of 1.0 mm was formed in the same manner as in Example 1, except that the average particle diameter of the alumina slurry was set to 1.0 $\mu$m, and the polishing pressure was set to 4 kPa. Note that the flatness of the resin substrate was 10.8 $\mu$m, and the TTV of the resin substrate was 0.8 $\mu$m.

[Example 3]

A resin substrate having a thickness of 1.0 mm was formed in the same manner as in Example 1, except that the average particle diameter of the alumina slurry was set to 1.0 $\mu$m, the polishing pressure was set to 5 kPa, and the rotation speed of the surface plate of the polishing apparatus was set to 1.2 times that in Example 1. Note that the flatness of the resin substrate was 18.2 $\mu$m, and the TTV of the resin substrate was 0.9 $\mu$m.

[Example 4]

A resin substrate having a thickness of 1.0 mm was formed in the same manner as in Example 1, except that the average particle diameter of the alumina slurry was set to 5.0 $\mu$m, the polishing pressure was set to 6 kPa, and the rotation speed of the surface plate of the polishing apparatus was set to 1.3 times that in Example 1. Note that the flatness of the resin substrate was 24.3 $\mu$m, and the TTV of the resin substrate was 1.0 $\mu$m.

[Comparative Example 1]

A resin substrate having a thickness of 1.0 mm was formed in the same manner as in Example 1, except that the average particle diameter of the alumina slurry was set to 8.0 $\mu$m, the polishing pressure was set to 2 kPa, and the rotation speed of the surface plate of the polishing apparatus was set to 1.1 times that in Example 1. Note that the flatness of the resin substrate was 27.5 $\mu$m, and the TTV of the resin substrate was 1.0 $\mu$m.

[Comparative Example 2]

A resin substrate having a thickness of 1.0 mm was formed in the same manner as in Example 1, except that the average particle diameter of the alumina slurry was set to 5.0 $\mu$m, the polishing pressure was set to 6 kPa, the rotation speed of the surface plate of the polishing apparatus was set to 1.3 times that in Example 1, and annealing was not performed. Note that the flatness of the resin substrate was 28.1 $\mu$m, and the TTV of the resin substrate was 1.3 $\mu$m.

[Table 1]

|  | Retardation value: (nm) | A | B | A/B |
|---|---|---|---|---|
| Ex. 1 | 8.7 | 24.72 | 18.87 | 1.31 |
| Ex. 2 | 14.5 | 15.54 | 13.17 | 1.18 |
| Ex. 3 | 19.5 | 52.92 | 34.24 | 1.55 |
| Ex. 4 | 26.1 | 95.11 | 28.48 | 3.34 |
| Com. Ex. 1 | 31.4 | 41.42 | 25.10 | 1.65 |
| Com. Ex. 2 | 11.6 | 31.63 | 8.48 | 3.73 |

In Examples 1 and 2, both the retardation value of the resin substrate and the A/B value, which represents variation in the distribution of retardation, were low. As a result, when used as a light guide plate, no bleeding or blurring occurred at the image contours, and no dark areas appeared in any part of the image, thereby achieving excellent light-guiding properties with uniform brightness.
In Example 3, slight bleeding was observed in the image compared with Examples 1 and 2; however, no uneven brightness occurred, and clear image display was possible.
In Example 4, as in Example 3, slight bleeding was observed in the image, and dark areas were also confirmed in part of the image.
In Comparative Example 1, the residual stress on the surface of the resin substrate was not sufficiently removed, and therefore the retardation value exceeded the predetermined range. As a result, bleeding was observed at the image contours.
In Comparative Example 2, wire-saw marks generated during slicing were not sufficiently removed by polishing, and residual stress caused by the wire-saw marks remained in a streaked pattern in a certain direction, resulting in uneven brightness and the occurrence of dark areas in part of the image.

[Example 5]

To form a resin substrate, a molten thermoplastic resin (an acrylic resin to which 3 parts by mass of a hindered amine light stabilizer and 5 parts by mass of a phenolic antioxidant were added) was injected into a cavity having a predetermined shape. The mold cooling time was sufficiently ensured, the initial mold temperature was set to 80°C, and cooling was performed while lowering the mold temperature using water cooling so that the molded article reached a temperature at or below the removal temperature 150 seconds after injection. The molded article was then removed from the mold, and residual stress was removed by annealing. The annealing conditions can be appropriately set according to the resin material; for example, residual stress was removed by heating at 150°C for 3 hours and then cooling over a period not less than the heating time to reduce internal strain. Thereafter, the surface was polished to adjust the shape, thereby obtaining a resin substrate having a thickness of 1.0 mm. The refractive index of the resin substrate was 1.60, and the density was 1.25 g/cm$^3$. Note that the flatness of the resin substrate was 5.8 $\mu$m, and the TTV of the resin substrate was 0.7 $\mu$m. The haze value before the accelerated weathering test was 0.25%, and the haze value after the accelerated weathering test was 0.8%.

[Example 6]

A resin substrate having a thickness of 1.0 mm was obtained by performing injection molding in the same manner as in Example 5, except that a material was used in which titanium oxide particles having an average particle size of 40 nm were added in an amount of 15 parts by weight per 100 parts by weight of a thermoplastic resin. The refractive index of the resin substrate was 1.67, and the density was 1.47 g/cm$^3$. Note that the flatness of the resin substrate was 9.7 $\mu$m, and the TTV of the resin substrate was 0.9 $\mu$m.

[Example 7]

A resin substrate having a thickness of 1.0 mm was obtained by performing injection molding in the same manner as in Example 5, except that a material was used in which titanium oxide particles having an average particle size of 40 nm were added in an amount of 50 parts by weight per 100 parts by weight of a thermoplastic resin. The refractive index of the resin substrate was 1.76, and the density was 1.77 g/cm$^3$. Note that the flatness of the resin substrate was 16.8 $\mu$m, and the TTV of the resin substrate was 0.8 $\mu$m.

[Comparative Example 3]

A resin substrate having a thickness of 1.0 mm was obtained without performing annealing after performing injection molding in the same manner as in Example 5, except that a material was used in which titanium oxide particles having an average particle size of 40 nm were added in an amount of 30 parts by weight per 100 parts by weight of a thermoplastic resin. Note that the flatness of the resin substrate was 21.5 $\mu$m, and the TTV of the resin substrate was 1.2 $\mu$m.

[Table 2]

|  | Retardation value: (nm) | A | B | A/B |
|---|---|---|---|---|
| Ex. 5 | 7.2 | 9.21 | 4.82 | 1.91 |
| Ex. 6 | 6.3 | 16.33 | 6.40 | 2.55 |
| Ex. 7 | 9.6 | 14.61 | 4.85 | 3.01 |
| Com. Ex. 3 | 18.6 | 23.15 | 6.52 | 3.55 |

In Examples 5 to 7, the retardation value of the resin substrate was reduced to a small value through annealing. However, the resin and its additives used for injection molding affected fluidity and orientation, resulting in an increase in the A/B value, which represents the variation in the distribution of retardation.

Accordingly, the resin substrate of Example 5, which was formed from a thermoplastic resin without the addition of titanium oxide as a refractive index modifier, can provide excellent light-guiding properties when used as a light guide plate, without causing bleeding or blurring at image contours and without generating dark areas in any part of the image, thereby achieving uniform brightness. On the other hand, in Examples 6 and 7, it can be confirmed that dark areas occurred in part of the image, resulting in uneven brightness.

Comparative Example 3, in which annealing was not performed, was confirmed to cause bleeding at image contours, brightness unevenness, and the occurrence of dark areas in part of the image.

List of Reference Numerals

1        Light guide plate
10        Substrate
24        Image display device
32, 52        Diffraction grating

**Claims**

**1.**    A resin substrate for forming an optical member, the resin substrate comprising a resin,

wherein the resin substrate has a thickness of 0.1 to 1.5 mm,
the resin has a density of 0.93 to 2.10 g/cm$^3$,
the resin substrate has a refractive index of 1.60 or more,
the resin substrate has a retardation value of 30 nm or less, and

when A represents a difference between a maximum value and a minimum value of retardation as measured along a straight line in a uniaxial direction of the resin substrate, and B represents a difference between a maximum value and a minimum value of retardation as measured along a straight line in a direction substantially orthogonal to the uniaxial direction, a relationship represented by a formula (1) below is satisfied:

$$A/B \le 3.5 \qquad (1)$$

2. The resin substrate according to claim 1, wherein the resin substrate has a haze of 1.8% or less after an accelerated weathering test is conducted for 200 hours in cycles of 5 hours of UV irradiation at 0.75 W/m$^2$ and 5 hours of moisture exposure at 95% RH.

3. The resin substrate according to claim 1, wherein a ratio (R/D) of the refractive index (R) of the resin substrate to a density (D) of the resin substrate is 1.00 to 1.30.

4. The resin substrate according to claim 1, wherein the resin includes at least one selected from the group consisting of a urethane-based resin, an episulfide resin, a polycarbonate resin, an acrylic resin, an epoxy resin, and a nitrogen-containing aromatic polymer resin.

5. The resin substrate according to claim 1, wherein the resin substrate contains an ultraviolet absorber or an antioxidant.

6. The resin substrate according to claim 1, wherein the resin substrate contains a refractive index modifier.

7. The resin substrate according to claim 1, wherein the resin substrate contains a birefringence modifier.

8. The resin substrate according to claim 1, wherein the resin substrate is a disk.

9. The resin substrate according to claim 1, wherein the resin substrate has a flatness of 25.0 $\mu$m or less.

10. A light guide plate comprising:

a substrate containing a resin; and
a diffraction grating formed on at least a portion of the substrate,
wherein the substrate has a thickness of 0.1 to 1.5 mm,
the resin has a density of 0.93 to 2.10 g/cm$^3$,
the substrate has a refractive index of 1.60 or more,
the substrate has a retardation value of 30 nm or less, and
when A represents a difference between a maximum value and a minimum value of retardation as measured along a line in a uniaxial direction of the substrate, and B represents a difference between a maximum value and a minimum value of retardation as measured along a line in a direction substantially orthogonal to the uniaxial direction, a relationship represented by a formula (1) below is satisfied:

$$A/B \le 3.5 \qquad (1)$$

11. The light guide plate according to claim 10, wherein the light guide plate has a haze of 1.8% or less after an accelerated weathering test is conducted for 200 hours in cycles of 5 hours of UV irradiation at 0.75 W/m$^2$ and 5 hours of moisture exposure at 95% RH.

12. The light guide plate according to claim 10, wherein a ratio (R/D) of the refractive index (R) of the substrate to a density (D) of the substrate is 1.00 to 1.30.

13. The light guide plate according to claim 10, wherein the resin includes at least one selected from the group consisting of a urethane-based resin, an episulfide resin, a polycarbonate resin, an acrylic resin, an epoxy resin, and a nitrogen-containing aromatic polymer resin.

14. The light guide plate according to claim 10, wherein the substrate contains an ultraviolet absorber or an antioxidant.

**15.** The light guide plate according to claim 10, wherein the substrate contains a refractive index modifier.

**16.** The light guide plate according to claim 10, wherein the substrate contains a birefringence modifier.

**17.** The light guide plate according to claim 10, wherein the substrate has a flatness of 25.0 $\mu$m or less.

**18.** An optical member for eyewear, comprising:

a light-transmitting base material made of a resin; and
the light guide plate according to any one of claims 10 to 17,
wherein at least one said light guide plate is integrally held by the light-transmitting base material, and
a refractive index (RW) of the light guide plate is greater than a refractive index (RT) of the light-transmitting base material.

**19.** A wearable device comprising the optical member for eyewear according to claim 18.

[ Fig 1]

[ Fig 2]

[ Fig 3]

[ Fig 4]

[ Fig 5]

## INTERNATIONAL SEARCH REPORT

| International application No. |
|---|
| **PCT/JP2024/019889** |

| A. | CLASSIFICATION OF SUBJECT MATTER |
|---|---|

*G02B 27/02*(2006.01)i
FI: G02B27/02 Z

According to International Patent Classification (IPC) or to both national classification and IPC

| B. | FIELDS SEARCHED |
|---|---|

Minimum documentation searched (classification system followed by classification symbols)

G02B27/02: G02B27/01

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2020-126239 A (MITSUBISHI CHEMICAL CORPORATION) 20 August 2020 (2020-08-20)<br>paragraphs [0005]-[0061], [0171]-[0176], [0231], [0238], [0329], table 1, fig. 1-6, 19 | 1-19 |
| Y | JP 2021-162621 A (ASAHI KASEI KABUSHIKI KAISHA) 11 October 2021 (2021-10-11)<br>paragraphs [0011]-[0012], [0133]-[0143], [0152] | 1-19 |
| Y | JP 2021-504760 A (LG CHEM, LTD.) 15 February 2021 (2021-02-15)<br>paragraphs [0054]-[0061] | 2, 6, 11, 15 |
| Y | JP 2019-528474 A (MAGIC LEAP, INC.) 10 October 2019 (2019-10-10)<br>paragraph [0153] | 8 |
| Y | WO 2019/107249 A1 (AGC INC.) 06 June 2019 (2019-06-06)<br>paragraph [0116] | 18-19 |

☐ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 August 2024** | **20 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

| International application No. |
|---|
| **PCT/JP2024/019889** |

| Patent document cited in search report | | | Publication date (day/month/year) | Patent family member(s) | Publication date (day/month/year) |
|---|---|---|---|---|---|
| JP | 2020-126239 | A | 20 August 2020 | US 2021/0341877 A1 paragraphs [0010]-[0206], [0512]-[0526], [0673]-[0674], [0699], [0935], table 1, fig. 1-6, 19<br>WO 2020/162476 A1<br>EP 3923060 A1<br>KR 10-2021-0107071 A<br>CN 113474714 A<br>TW 202037974 A | |
| JP | 2021-162621 | A | 11 October 2021 | CN 113467081 A<br>TW 202136821 A | |
| JP | 2021-504760 | A | 15 February 2021 | US 2020/0355932 A1 paragraphs [0056]-[0063]<br>WO 2019/117588 A1<br>EP 3712683 A1<br>KR 10-2019-0072435 A<br>CN 111448501 A | |
| JP | 2019-528474 | A | 10 October 2019 | US 2018/0052276 A1 paragraph [0364]<br>WO 2018/039271 A1<br>EP 3800497 A1<br>TW 201819989 A<br>CA 3034389 A1<br>KR 10-2019-0039801 A<br>CN 109863446 A | |
| WO | 2019/107249 | A1 | 06 June 2019 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022097824 A